Europäisches Patentamt

(19) European Patent Office

Office européen des brevets

(11) Publication number: **0 457 736 A1**

## (12) EUROPEAN PATENT APPLICATION

(21) Application number: **91830197.9**

(22) Date of filing: **14.05.91**

(51) Int. Cl.⁵: **A61C 19/00**

(30) Priority: **16.05.90 IT 2118490 U**

(43) Date of publication of application:
**21.11.91 Bulletin 91/47**

(84) Designated Contracting States:
**CH DE ES FR GB LI**

(71) Applicant: **Tomasini, Gianni**
**Via Col di Lana 6**
**I-20136 Milan (IT)**

(72) Inventor: **Tomasini, Gianni**
**Via Col di Lana 6**
**I-20136 Milan (IT)**

(74) Representative: **Cicogna, Franco**
**Ufficio Internazionale Brevetti Dott.Prof.**
**Franco Cicogna Via Visconti di Modrone, 14/A**
**I-20122 Milano (IT)**

(54) **Dental impression container.**

(57) A dental impression container comprises a box-like body (1) at one end of which there is provided a cross small shaft (2) which rotatably supports a plurality of perpendicular rods (4) which can be restrained according to a set slanted arrangement and being provided with radial lugs (10) each of which supports a corresponding dental impression holder (9).

EP 0 457 736 A1

Fig. 1

BACKGROUND OF THE INVENTION

The present invention relates to a dental impression container adapted to hold dental impressions under a sterile condition and to allow a dentist to properly remove the dental impressions therefrom.

As is known, a dentist must frequently take an impression of the dental arch of a patient, in order to prepare dental prostheses either of a covering or a replacement type.

The material for making a dental impression is conventionally held within suitable metal elements which substantially reproduce the shape of a dental arch.

Obviously, these dental impression holder elements must be used under absolutely sanitary conditions and, if they are not properly preserved, then they must be subjected to disinfection and/or sterilizing processings.

This requirement, as it should be apparent, greatly increases the operation time by the dentist, with a consequent great increase of the cost for the patient.

SUMMARY OF THE INVENTION

Accordingly, the aim of the present invention is to overcome the above mentioned drawback, by providing e dental impression container which allows a dentist to operate under absolutely sanitary conditions.

Within the scope of the above mentioned aim, a main object of the present invention is to provide such a dental impression container which, in addition to preparing the dental impressions under properly sterilized conditions, allows a dentist to remove a dental impression therefrom in a very simple and quick way.

According to one aspect of the present invention, the above mentioned aim and objects, as well as yet other objects, which will become more apparent hereinafter, are achieved by a denial impression container, characterized in that said container comprises a box-like body at one end of which there is provided a cross shaft element which rotatably supports a plurality of rod elements extending perpendicularly therefrom, said rod elements being adapted to be restrained to said shaft element according to a set slanted arrangement and being provided with radial lugs each of which supports a corresponding dental impression holder.

BRIEF DESCRIPTION OF THE DRAWINGS

Further characteristics and advantages of the dental container according to the present invention, will become more apparent from the following detailed disclosure of a preferred embodiment thereof which is illustrated, by way of a merely indicative but not limitative example, in the figures of the accompanying drawings, where:

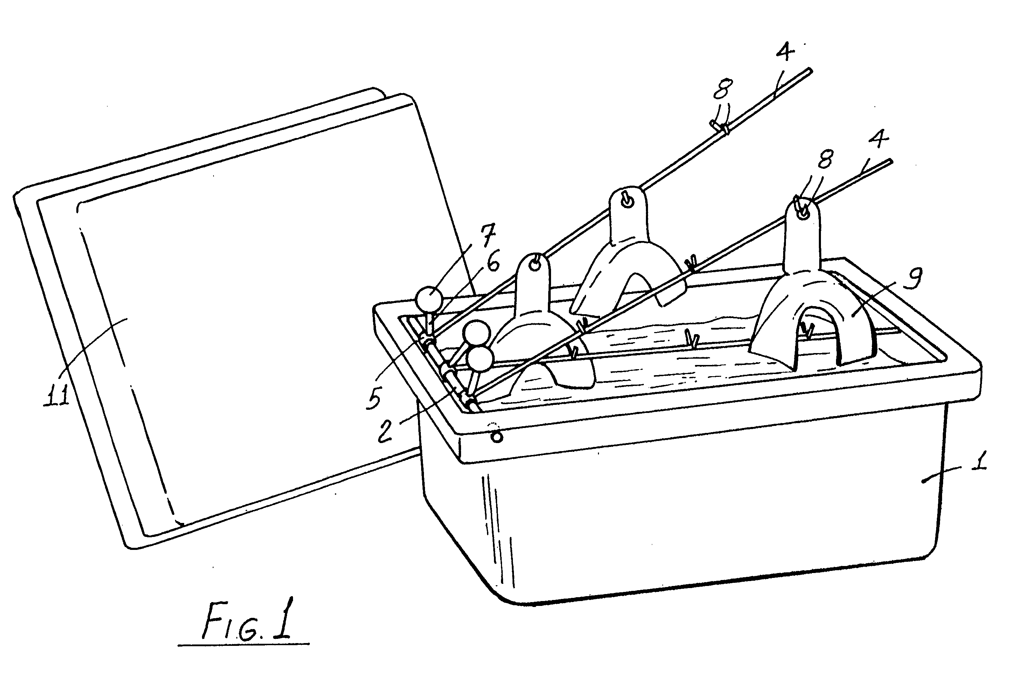

Figure 1 is a schematic perspective view of the dental impression container according to the present invention; and

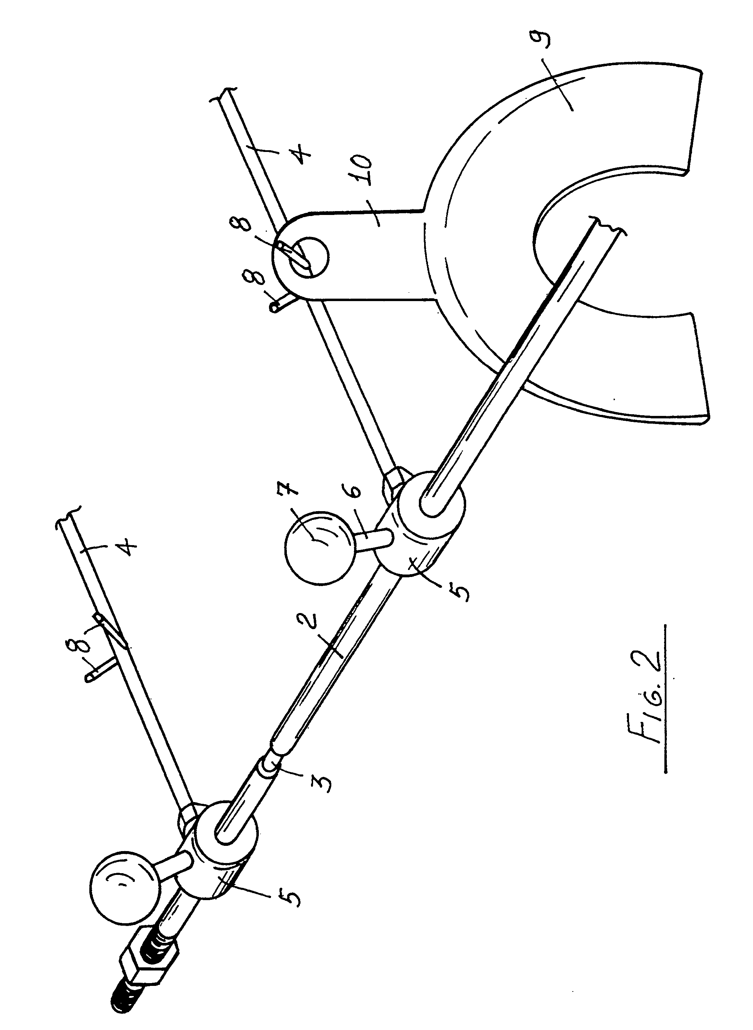

Figure 2 is a schematic partial view showing the shaft or mandrel element restraining rod elements for supporting respective dental impression holders.

DESCRIPTION OF THE PREFERRED
EMBODIMENT

With reference to the figures of the accompanying drawings, the dental impression container according to the present invention comprises a box-like body 1 having preferably an elongated rectangular cross-section, and being provided with a discharging hole, closed by a closure plug.

At one end of the box-like body there are fixedly mounted a cross small shaft element 2, provided with a plurality of radially extending slots 3 which are evenly spaced from one another.

The shaft element rotatably supports a plurality of perpendicularly extending rod 4, the number of which is equal to that of the mentioned slots.

More specifically, said rods are mounted on a collar 5 which is provided with a radial threaded hole therein a screw 6 engages provided with an operating knob 7, adapted to operate as a stop and guiding element for said rods.

In fact, the screw 6, as it is loosened, allows the rod to be restrained in a corresponding slot and rotated about the small shaft element and then to be locked according to a set slanted arrangement.

On the rods 4 there are provided radially extending pins 8 upward slanted and supporting corresponding dental impression holders 9, through suitable lugs 10 radially formed of said dental impression holders.

In this connection it should be pointed out that the box-like body 1 is filled with disinfectant and/or sterilizing liquids so that the dental impression holders, which are usually immersed in these liquids, will be always hygenically ready for the use.

In fact, the dentist, by locking one or more of the rods 4 at a slanted position can easily take up a desired impression holder (for example by means of a two-point compasses) without directly contacting the dental impression.

The mentioned box-like body, moreover, can also be provided with a cover 11 adapted to close, upon removing the screws 6, the space within said box-like body, so that to properly protect the dental impressions held therein.

As shown, the box-like body is moreover provided with an inner abutment 12, opposite to the end of said box-like body supporting the shaft element 2, and adapted to support the rods 4 as the mentioned screws 6 are removed therefrom.

From the above disclosure it should be apparent that the invention fully achieved the intended aim and objects.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A dental impression container, characterized in that said container comprises a box-like body at one end of which there is provided a cross shaft element which rotatably supports a plurality of rod elements extending perpendicularly therefrom, said rod elements being adapted to be restrained to said shaft element according to a set slanted arrangement and being provided with radial lugs each of which supports a corresponding dental impression holder.

2. A container, according to Claim 1, characterized in that said box-like body has an elongated cross section and is provided with a discharging hole closed by a closing removable plug element, said cross shaft element fixedly restrained at one end of said box-like body being provided with a plurality of equispaced radially extending slots.

3. A container, according to Claims 1 and 2, characterized in that said rods rotatably mounted on said shaft element are provided in an number equal to that of said slots, said rods being restrained on a collar element provided with a threaded radial hole therein a screw engages, said screw including an operating knob element adapted to operate as a stop and guide elements for said rods.

4. A container, according to one or more of the preceding claims, characterized in that on said rods there are provided radially extending upward slanted pins supporting corresponding dental impression holders, through supporting lugs radially formed of said dental impression holders.

5. A container, according to one or more of the preceding claims, characterized in that said container is filled with disinfectant and/or sterilizing liquids, said box-like body being moreover provided with a closing cover.

6. A container, according to one or more of the preceding claims, characterized in that said boxlike body is provided with an inner abutment opposite to the end thereof supporting said shaft element and adapted to support said rods as said screws are removed therefrom.

Fig. 1

Fig. 2

EP 0 457 736 A1

European Patent Office

**EUROPEAN SEARCH REPORT**

Application Number

EP 91 83 0197

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A- 328 173 (DE TREY) | | A 61 C 19/00 |
| A | FR-A- 928 973 (MARDER) | | |
| A | US-A-3 936 937 (GORDON) | | |
| A | US-A-4 600 251 (ZIMMERMAN) | | |
| A | DE-A-3 534 839 (DÜRR-DENTAL) | | |

TECHNICAL FIELDS SEARCHED (Int. Cl.5)

A 61 C

The present search report has been drawn up for all claims

| Place of search | Date of completion of the search | Examiner |
|---|---|---|
| THE HAGUE | 09-08-1991 | VANRUNXT J.M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

7